# EUROPEAN PATENT APPLICATION

(11) **EP 4 467 622 A1**
(43) Date of publication of application: **27.11.2024**
(21) Application number: 23851092.9
(22) Date of filing: 13.06.2023
(51) Int. Cl.: C09J 133/08, C09J 133/10, H01M 50/198, H01M 50/409, H01M 50/411

(54) **BINDER FOR SECONDARY BATTERY AND PREPARATION METHOD THEREFOR, SEPARATOR, BATTERY CELL, BATTERY AND ELECTRIC DEVICE**

(30) Priority: 14.04.2023 CN 202310402475
(71) Applicant: Contemporary Amperex Technology (Hong Kong) Limited, Central, Central And Western District (HK)
(72) Inventor: LI, Lei, Ningde, Fujian 352100 (CN); ZHENG, Yi, Ningde, Fujian 352100 (CN); KANG, Haiyang, Ningde, Fujian 352100 (CN); CHEN, Meihuang, Ningde, Fujian 352100 (CN); SUN, Chengdong, Ningde, Fujian 352100 (CN)
(74) Representative: Kraus & Lederer PartGmbB
(86) International application number: PCT/CN2023/099993
(87) International publication number: WO 2024/212343

(57) **Abstract**

The present application relates to the technical field of secondary batteries, and in particular to a binder for secondary batteries and a preparation method thereof, as well as a separator, battery cell, battery and electrical apparatus comprising the binder. The binder for secondary batteries includes a first polymer and a second polymer, the first polymer includes an acrylate copolymer, and the second polymer includes a water-soluble polymer. When the separator is coated, the binder is stirred evenly in water, coated on the separator, and oven dried to form a bonding layer on the separator. The bonding layer includes a side facing the separator and a side away from the separator. The bonding layer is bonded on the separator, and the side away from the separator has no adhesiveness, which facilitates the winding and unwinding of the separator. When the separator is wound with the positive and negative electrode plates and then cold-pressed, the binder has good bonding strength, so that the positive and negative electrode plates and the separator fit closely with each other, which improves the hardness of the battery cell and the cycling performance of the secondary battery.

## Description

### Cross-reference to Related Applications

The present application claims the priority of the Chinese patent application No. 202310402475.2 filed on April 14, 2023, which is incorporated herein by reference in its entirety.

### Technical Field

The present application relates to the technical field of secondary batteries, and in particular to a binder for secondary batteries and a preparation method thereof, as well as a separator, battery cell, battery and electrical apparatus.

### Background

With the rapid growth of portable electronic devices, electric vehicles, etc., the demand for power batteries is also increasing. Among others, the electrochemical performance of batteries has attracted more and more attention.

At present, the battery cell has a problem of large opening, that is, a gap is easily formed between the electrode plate and the separator, resulting in poor cycling performance of the battery.

### Summary of the Invention

The main objective of the present application is to provide a binder for secondary batteries, aiming to improve the bonding strength between the separator and the electrode plate through the binder, and improve the cycling performance of the battery.

In order to achieve the above objective, the present application proposes a binder for secondary batteries, wherein the binder includes a first polymer and a second polymer, the first polymer includes an acrylate copolymer, and the second polymer includes a water-soluble polymer.

The acrylate copolymer has good adhesiveness, and the use of the acrylate copolymer makes the bonding performance between the separator and the electrode plate better after cold pressing.

Water-soluble polymers are soluble in water and non-sticky in dry state.

The binder includes a first polymer and a second polymer, the first polymer includes an acrylate copolymer, the second polymer includes a water-soluble polymer, and when the binder is applied to the separator, the water-soluble polymer servers as a support supporting the first polymer, connecting the first polymer to the water-soluble polymer, and bonding the first polymer to the separator. Specifically, in the process of applying the binder to the separator, including mixing the binder and water to form a slurry, and then coating the slurry onto the separator, the water-soluble polymer has adhesiveness after exposure to water, the water-soluble polymer can be bonded to the separator, and the water-soluble polymer can bond the first polymer (including acrylate copolymers) onto the separator, and the acrylate copolymer and/or water-soluble polymer in the binder can partially penetrate into the pores of the separator to achieve bonding with the separator. When the slurry is oven dried, due to the volatilization of water, the water-soluble polymer molecules are entangled with each other, and the molecules interact with each other, thus forming a network structure to support and connect the first polymer (including acrylate copolymers) and bond the first polymer particles onto the separator. The slurry layer becomes a bonding layer after oven drying, and the bonding layer has a side facing the separator and a side away from the separator. In the process of applying the slurry, the water-soluble polymer can be bonded to the separator, or the acrylate copolymer and/or water-soluble polymer in the binder can partially penetrate into the pores of the separator to achieve bonding with the separator. Therefore, the bonding layer is bonded onto the separator. Since the acrylate copolymer and the water-soluble polymer are non-sticky after oven drying, the side of the bonding layer away from the separator is non-adhesive, thus facilitating the winding and unwinding of the separator.

When the cold pressing process is carried out after winding with the positive and negative electrode plates, the binder has good bonding strength, so that the positive and negative electrode plates and the separator fit closely with each other. Specifically, after cold pressing, the bonding strength is mainly provided by the mechanical interlocking effect of the acrylate copolymer and water-soluble polymer in the binder penetrating into the pores of the electrode plate, as well as the intermolecular force of the acrylate copolymer. Therefore, the binder of the present application improves the cold pressing bonding strength between the separator and the positive and negative electrode plates, alleviates problems such as battery cell opening and soft battery cell, thereby improving the hardness of the battery cell. Also, application of the binder to the secondary battery after being coated onto the separator improves the kinetic performance of the secondary battery, reduces the electrochemical impedance, and can improve the rate performance of the secondary battery and the cycling performance of the battery.

Optionally, the mass ratio of the first polymer to the second polymer is 1:(0.1-10); preferably 1 :(0.2-5).

Setting the mass ratio of the first polymer to the second polymer in the above-mentioned range can help the bonding layer to form a continuous network structure to bond the first polymer onto the separator, and improve the adhesiveness of the bonding layer at room temperature.

That is to say, in the process of increasing the amount of the second polymer, the bonding strength of the bonding layer first increases and then decreases, and when the mass of the first polymer and the second polymer is controlled within the above-mentioned range, it can effectively improve the bonding strength of the adhesive applied on the separator.

Optionally, the second polymer includes one or more of polyacrylamide, polyacrylic acid, polyvinylpyrrolidone, polyvinyl alcohol, polyethylene glycol, and polymaleic anhydride.

The second polymer includes the above-mentioned water-soluble polymers. These water-soluble polymers contain hydrophilic groups and a certain amount of hydrophobic groups, so they have a certain surface activity, can reduce the surface tension of water to a certain extent and improve the solubility and dispersion properties of the binder in the water phase. That is to say, when preparing a separator coating slurry, the water-soluble polymer is used to control the viscosity and rheological properties of the slurry, so that the binder can be better dispersed and suspended. Moreover, the second polymer is also capable of chemical reaction (for example, has carboxyl, hydroxyl, etc. that react with other groups), and the polar group on the structure of the water-soluble polymer can form hydrogen bonds between the first polymer, the separator, and the electrode plate, thereby improving the bonding strength between the separator and the electrode plate.

Optionally, the binder has a volume particle size distribution Dv50 of 1 µm to 15 µm; preferably, 3 µm to 12 µm.

Theoretically, the volume average particle size Dv50 of the binder in the present application can be lower than 1 µm, and can also be higher than 15 µm, but considering that the binder of the present application is used on the separator, the volume average particle size Dv50 of the binder is set within the above range to improve blocking of the pores of the separator by the binder, reduce the passage of lithium ions (take lithium-ion batteries as an example, of course, it can also be other types of secondary batteries) on the separator, and improve the problem that the binder applied to the separator forms a thicker coating which affects the energy density of the battery prepared in the later stage. Therefore, the binder has a volume particle size distribution Dv50 of 1 µm to 15 µm; preferably, 3 µm to 12 µm.

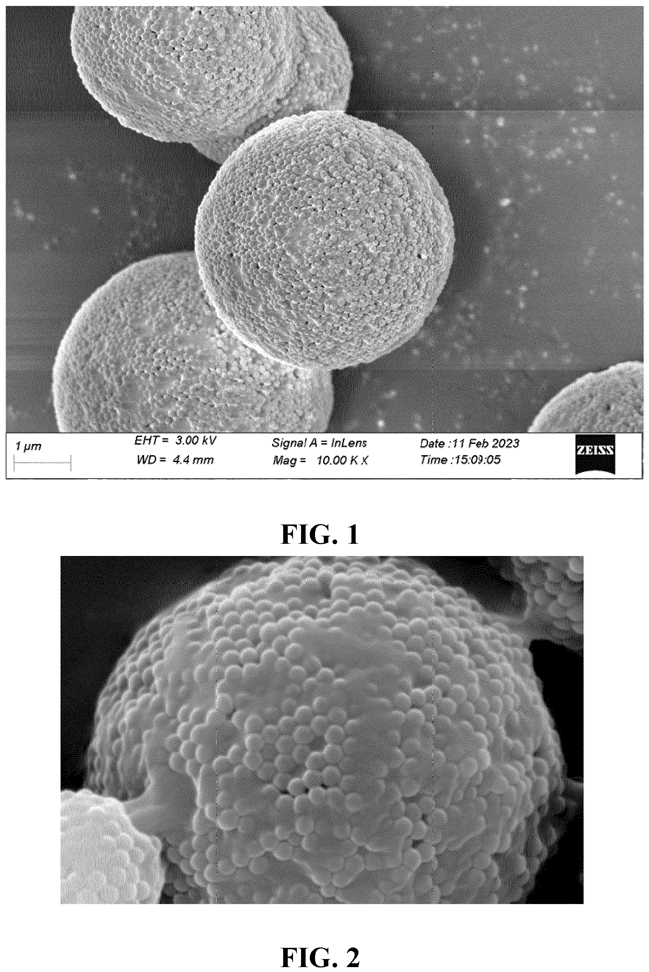

It can be understood that, as shown in Fig. 1, the binder particles are secondary particles containing primary particles of the first polymer and primary particles of the second polymer, so that the second polymer acts as a skeleton therein, and when the binder slurry is applied to the separator, the second polymer plays the role of supporting and connecting the first polymer, and bonding the first polymer to the separator. After the slurry is oven dried to form a bonding layer, the bonding layer can be bonded to the separator, but the side of the bonding layer away from the separator has no bonding strength, which facilitates the winding and unwinding of the separator. Moreover, when the cold pressing process is performed after the separator and the positive and negative electrode plates are wound, after being squeezed, the first polymer and the second polymer can deform under force and penetrate into the pores of the separator and the electrode plate to achieve the bonding effect.

Optionally, the shape of the binder includes a spherical shape.

The spherical shape is conducive to uniform dispersion in the process of stirring the slurry, which is conducive to uniform coating.

Optionally, the first polymer includes an acrylate monomer, and the structure of the acrylate monomer includes: 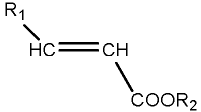 wherein, R1 includes hydrogen atom or alkyl of 1-12 carbon atoms, and R2 includes alkyl of 1-12 carbon atoms.

Acrylate monomers include unsaturated ester groups, which can improve the anti-swelling ability of polymers, and as flexible monomer segments in molecular segments, can adjust the glass transition temperature of polymers and improve toughness of the binder when it is applied, which contributes to good bonding effect.

Optionally, the acrylate monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

By using any one or more of the above-mentioned acrylate monomers, the glass transition temperature of the polymer can be adjusted, and the anti-swelling ability of the polymer can be improved.

Optionally, the first polymer includes an acrylonitrile monomer, and the structure of the acrylonitrile monomer includes: 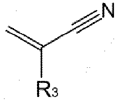 wherein, R3 includes hydrogen atom or alkyl of 1-6 carbon atoms.

There are unsaturated cyano groups in the structure of acrylonitrile monomers, which help to improve ion conductivity and improve adhesiveness.

Optionally, the acrylonitrile monomer includes one or more of acrylonitrile and methacrylonitrile.

The ion conductivity of the binder can be improved by using any one or more of the above-mentioned acrylonitrile monomers.

Optionally, the first polymer includes an acrylamide monomer, and the structure of the acrylamide monomer includes: 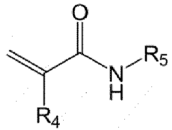 wherein, R4 includes hydrogen atom or alkyl of 1-6 carbon atoms, and R5 includes hydrogen atom, hydroxyl-substituted alkyl of 1-6 carbon atoms, or alkoxy of 1-6 carbon atoms.

The third unit includes an unsaturated amide group, which plays a role of cross-linking and also has good adhesiveness.

Optionally, the acrylamide monomer includes one or more of acrylamide, N-methylolacrylamide and N-butoxymethacrylamide.

The use of any one or more of the above acrylamide monomers can regulate the molecular weight of the polymer, and the molecular weight of the binder being within a certain range helps to improve adhesiveness.

It can be understood that, the constituent monomers of the first polymer may include one, two or three of the above three monomers, which are not specifically limited.

Optionally, the first polymer includes an acrylate monomer, an acrylonitrile monomer and an acrylamide monomer, and the mass ratio of the acrylate monomer, the acrylonitrile monomer and the acrylamide monomer is 100:(1-80):(1-20), preferably 100:(20 -60):(5-15).

In order to improve the comprehensive performance of the first polymer, the first polymer includes an acrylate monomer, an acrylonitrile monomer and an acrylamide monomer, and when the mass ratio of the acrylate monomer, the acrylonitrile monomer and the acrylamide monomer is 100:(1-80):(1-20), preferably 100:(20 -60):(5-15), the bonding effect is better.

The present application further provides a preparation method of a binder for secondary batteries, the method comprising:
blending and stirring water, an emulsifier, an initiator, and constituent monomers of the first polymer, and heating and reacting to obtain a first polymer emulsion;
mixing and stirring the first polymer emulsion and the second polymer, and spray-drying to obtain a binder.

In the present application, the first polymer emulsion is obtained through emulsion polymerization, and the binder is obtained through spray drying.

The binder particles are secondary particles containing primary particles of the first polymer and primary particles of the second polymer, so that the second polymer acts as a skeleton therein to support the first polymer, and when the binder is prepared into a slurry to coat on the separator, the first polymer is bonded to the separator by the second polymer. After oven drying the slurry on the separator, the second polymer forms a network structure, which acts to support and connect the first polymer and bond the first polymer particles onto the separator.

An embodiment of the present application provides a separator, which includes the above-mentioned binder for secondary batteries or a binder prepared by the above-mentioned preparation method of the binder for secondary batteries.

An embodiment of the present application provides a battery cell, and the battery cell includes the above-mentioned separator.

An embodiment of the present application provides a battery, and the battery includes the above-mentioned battery cell.

An embodiment of the present application provides an electrical apparatus, and the electrical apparatus includes the above-mentioned battery cell or the above-mentioned battery.

### Description of Drawings

In order to illustrate the technical solutions in the examples of the present application or in the prior art more clearly, the drawings to be used in the examples of the present application or in the prior art will be briefly introduced below. Obviously, the drawings described below are only some examples of the present application. For those of ordinary skill in the art, other drawings can also be obtained according to the structures shown in the drawings without any creative effort.
Fig. 1 is an SEM photograph of a binder provided in Example 1 of the present application;
Fig. 2 is a partially enlarged schematic diagram of the adhesive in Example 1 in Fig. 1;
Fig. 3 is a structural schematic diagram of a separator provided in an embodiment of the present application.
Fig. 4 is a flowchart of a preparation method of a binder for secondary batteries provided in an embodiment of the present application;
Fig. 5 is a schematic diagram of an electrode assembly provided in an embodiment of the present application;
Fig. 6 is an exploded view of the electrode assembly provided in an embodiment of the present application shown in Fig. 5;
Fig. 7 is a schematic diagram of a battery module provided in an embodiment of the present application;
Fig. 8 is a schematic diagram of a battery pack provided in an embodiment of the present application;
Fig. 9 is an exploded view of the battery pack provided in an embodiment of the present application shown in Fig. 8;
Fig. 10 is a schematic diagram of an electrical apparatus provided in an embodiment of the present application.

**Description of reference numerals:**

| Reference numeral | Name | Reference numeral | Name |
|---|---|---|---|
| 1 | Battery pack | 51 | Case |
| 2 | Upper box | 52 | Electrode assembly |
| 3 | Lower box | 53 | Top cover assembly |
| 4 | Battery module | 6 | Core layer structure |
| 5 | Secondary battery | 7 | Shell layer structure |
| 10 | Separator | 21 | Side facing separator |
| 20 | Bonding layer | 23 | Side away from separator |

The realization, functional features and advantages of the present application will be further described in conjunction with examples and with reference to the drawings.

### Detailed Description

The technical solutions in the embodiments of the present application will be clearly and completely described below in conjunction with the drawings in the embodiments of the present application, and it is apparent that the described examples are a part of the examples of the present application rather than all the examples. Based on the examples in the present application, all other examples obtained by those of ordinary skill in the art without creative effort fall within the protection scope of the present application.

Hereinafter, embodiments of the binder and the preparation method thereof, as well as the separator, electrode assembly, battery cell, battery and electrical apparatus comprising the binder according to the present application are described in detail and specifically disclosed with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

The battery cell has a problem of large opening, that is, a gap is easily formed between the electrode plate and the separator, resulting in poor cycling performance of the battery.

The commonly used binder on the separator is polyvinylidene fluoride, but at present, the price of polyvinylidene fluoride has risen sharply, and its market supply is tight. Also, a hot pressing process is required to make the separator and the electrode plate tightly bonded; but as production speeds up, the hot-pressing process will gradually be replaced by the cold-pressing process. The cold-pressing of battery electrode plates refers to the shaping of the wound cell to reduce the elasticity of the battery cell, improve the up-to-standard rate of cells and ensure the consistency of the thickness of the finished battery cell.

If the bonding strength between the positive electrode plate, negative electrode plate and separator is insufficient, problems such as cell opening often occur, and also, the wettability to the electrolyte solution is poor, which cannot meet the performance requirements of the secondary battery for the coated separator; tight fitting between the separator and the electrode plate can improve the discharge capacity of the battery, reduce internal resistance, reduce polarization loss, prolong the cycle life of the battery, and improve the utilization rate of the secondary battery.

It can be understood that the battery cell is formed by bonding the positive electrode plate, the negative electrode plate and the separator, and the battery cell has a certain hardness. That is to say, the positive and negative electrode plates that are bonded together with the separator fit and support each other to form a structure with a certain thickness, and the structure with a certain thickness has a certain hardness. The negative electrode will expand during the charge and discharge process, and when the bonding strength is weak, a gap is easily formed between the positive and negative electrode plates and the separator, it is difficult for the positive and negative electrode plates and the separator to fit with and support each other, resulting in loose battery cells and low hardness. At this time, the power performance of the battery cells will deteriorate, for example, the rate performance will decrease, and the cycling performance will deteriorate. For example, in electric vehicles, if the battery cell is loose, it leads to slow charging of the battery, and at the same time, the cycling performance of the battery deteriorates, which directly leads to shortened battery life. As a result, electric vehicles need to replace batteries frequently, and the cost of consumers on electric vehicles increases.

Based on this, the present application proposes a binder for secondary batteries, wherein the binder includes a first polymer and a second polymer, the first polymer includes an acrylate copolymer, and the second polymer includes a water-soluble polymer.

Binder refers to a material with adhesiveness, which is used to bond different substances together.

Acrylate copolymer is a general term for polymers produced by copolymerization of acrylate monomers and other comonomers.

The acrylate monomer has an acrylate group in its structure, for example, methyl acrylate, ethyl acrylate, n-butyl acrylate.

The acrylate copolymer has good adhesiveness, and the use of the acrylate copolymer makes the bonding performance between the separator and the electrode plate better after cold pressing.

Water-soluble polymer is a hydrophilic polymer material that can dissolve or swell in water to form a solution or dispersion, and is non-viscous in a dry state.

The binder includes a first polymer and a second polymer, the first polymer includes an acrylate copolymer, the second polymer includes a water-soluble polymer, and when the binder is applied to the separator, the water-soluble polymer servers as a support supporting the first polymer, connecting the first polymer to the water-soluble polymer, and bonding the first polymer to the separator. Specifically, in the process of applying the binder to the separator, including mixing the binder and water to form a slurry, and then coating the slurry onto the separator, the water-soluble polymer has adhesiveness after exposure to water, the water-soluble polymer can be bonded to the separator, and the water-soluble polymer can bond the first polymer (including acrylate copolymers) onto the separator, and the acrylate copolymer and/or water-soluble polymer in the binder can partially penetrate into the pores of the separator to achieve bonding with the separator. When the slurry is oven dried, due to the volatilization of water, the water-soluble polymer molecules are entangled with each other, and the molecules interact with each other, thus forming a network structure to support and connect the first polymer (including acrylate copolymers) and bond the first polymer particles onto the separator. The slurry layer becomes a bonding layer after oven drying, and the bonding layer has a side facing the separator and a side away from the separator. In the process of applying the slurry, the water-soluble polymer can be bonded to the separator, or the acrylate copolymer and/or water-soluble polymer in the binder can partially penetrate into the pores of the separator to achieve bonding with the separator. Therefore, the bonding layer is bonded onto the separator. Since the acrylate copolymer and the water-soluble polymer are non-sticky after oven drying, the side of the bonding layer away from the separator is non-adhesive, thus facilitating the winding and unwinding of the separator.

When the cold pressing process is carried out after winding with the positive and negative electrode plates, the binder has good bonding strength, so that the positive and negative electrode plates and the separator fit closely with each other. Specifically, after cold pressing, the bonding strength is mainly provided by the mechanical interlocking effect of the acrylate copolymer and water-soluble polymer in the binder penetrating into the pores of the electrode plate, as well as the intermolecular force of the acrylate copolymer. Therefore, the binder of the present application improves the cold pressing bonding strength between the separator and the positive and negative electrode plates, alleviates problems such as battery cell opening and soft battery cell, thereby improving the hardness of the battery cell. Also, application of the binder to the secondary battery after being coated onto the separator improves the kinetic performance of the secondary battery, reduces the electrochemical impedance, and can improve the rate performance of the secondary battery and the cycling performance of the battery.

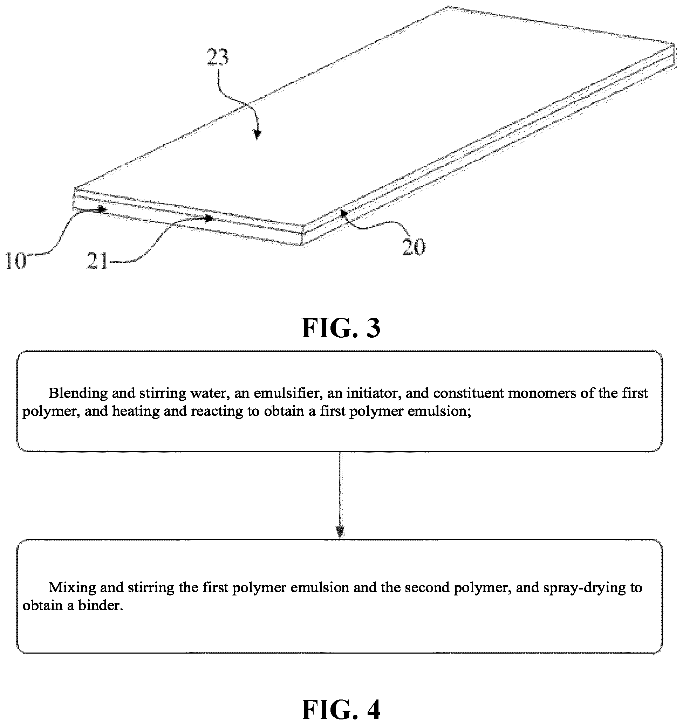

That is to say, the water-soluble polymer has adhesiveness after being dissolved in water, the slurry is coated on the separator, the water-soluble polymer can be bonded on the separator, and the acrylate copolymer and/or water-soluble polymer can partially penetrate into the pores of the separator, so that the acrylate copolymer and the water-soluble polymer in the binder are bonded to the separator, that is, as shown in Fig. 3, a side 21 of a bonding layer 20 facing a separator 10 is bonded to the separator.

After oven drying, a side 23 of the bonding layer 20 away from the separator is non-sticky. At this time, it facilitates the winding of the separator. In the process of cold pressing the electrode plate disposed on the surface of the bonding layer, part of the acrylate copolymer and/or water-soluble polymer in the binder further penetrate into the pores of the separator and the electrode plate, and form an intermolecular force with the molecules on the separator and the electrode plate, and the separator and the electrode plate are effectively bonded by the binder.

In an embodiment, the mass ratio of the first polymer to the second polymer is 1:(0.1-10); preferably, 1:(0.2-5).

The binder includes a first polymer and a second polymer, the mass of the first polymer is defined as M1, the mass of the second polymer is M2, and the mass ratio of the first polymer to the second polymer is M1:M2.

The test method of mass ratio is to record the mass M1 of the first polymer and the mass M2 of the second polymer input in the process of preparing the binder, and the mass ratio of the first polymer and the second polymer is M1:M2.

Setting the mass ratio of the first polymer to the second polymer in the above-mentioned range can help the bonding layer to form a continuous network structure to bond the first polymer onto the separator, and improve the reduced adhesiveness of the bonding layer at room temperature.

That is to say, in the process of increasing the amount of the second polymer, the bonding strength of the bonding layer first increases and then decreases, and when the mass of the first polymer and the second polymer is controlled within the above-mentioned range, it can effectively improve the bonding strength of the adhesive applied on the separator.

In the above 1:(0.1-10), the value includes the minimum value and maximum value of the range, and every value between the minimum value and the maximum value. Specific examples include but are not limited to the point value in the embodiments and 1:0.1, 1:1, 1:2, 1:3, 1:4, 1:5, 1:6, 1:7, 1:8, 1:9, 1:10, etc., and the range value between any two point values described above.

In the above 1:(0.2-5), the value includes the minimum value and maximum value of the range, and every value between the minimum value and the maximum value. Specific examples include but are not limited to the point value in the embodiments and 1:0.2, 1:1, 1:2, 1:3, 1:4, 1:5, etc., and the range value between any two point values described above.

In an embodiment, the second polymer includes one or more of polyacrylamide, polyacrylic acid, polyvinylpyrrolidone, polyvinyl alcohol, polyethylene glycol, polymaleic anhydride and polyethyleneimine.

The second polymer includes the above-mentioned water-soluble polymers. These water-soluble polymers contain hydrophilic groups and a certain amount of hydrophobic groups, so they have a certain surface activity, can reduce the surface tension of water to a certain extent and improve the solubility and dispersion properties of the binder in the water phase. That is to say, when preparing a slurry for a separator, the water-soluble polymer is used to control the viscosity and rheological properties of the slurry, so that the binder can be better dispersed and suspended. Moreover, the second polymer is also capable of chemical reaction (for example, has carboxyl, hydroxyl, etc. that react with other groups), and the polar group on the structure of the water-soluble polymer can form hydrogen bonds between the first polymer, the separator, and the electrode plate, thereby improving the bonding strength between the separator and the electrode plate.

In an embodiment, the binder has a volume particle size distribution Dv50 of 1 µm to 15 µm; preferably, 3 µm to 12 µm.

Dv50 means that, among the sample particles, 50% of the total volume of particles have a particle size larger than this value, and another 50% of the total volume of particles have a particle size smaller than this value; Dv50 can represent the median particle size of the sample.

The volume average particle size Dv50 of the binder can be tested by methods known in the art. As an example, GB/T 19077-2016 can be referred to, where a Malvern laser particle size analyzer is used to perform a characterization test, for example, a Malvern Mastersizer-3000 and other instruments are used for testing.

Theoretically, the volume average particle size Dv50 of the binder in the present application can be lower than 1 µm, and can also be higher than 15 µm, but considering that the binder of the present application is used on the separator, the volume average particle size Dv50 of the binder is set within the above range to improve blocking of the pores of the separator by the binder, reduce the passage of lithium ions (take lithium-ion batteries as an example, of course, it can also be other types of secondary batteries) on the separator, and improve the problem that the binder applied to the separator forms a thicker coating which affects the energy density of the battery prepared in the later stage. Therefore, the binder has a volume particle size distribution Dv50 of 1 µm to 15 µm; preferably, 3 µm to 12 µm.

In the above 1 µm to 15 µm, the value includes the minimum value and maximum value of the range, and every value between the minimum value and the maximum value. Specific examples include but are not limited to the point value in the embodiments and 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, etc., and the range value between any two point values described above.

In the above 3 µm to 12 µm, the value includes the minimum value and maximum value of the range, and every value between the minimum value and the maximum value. Specific examples include but are not limited to the point value in the embodiments and 3 µm, 4 µm, 5 µm, 6 µm, 7 µm, 8 µm, 9 µm, 10 µm, 11 µm, 12 µm, etc., and the range value between any two point values described above.

It can be understood that, as shown in Figs. 1 and 2, the binder particles are secondary particles containing primary particles of the first polymer and primary particles of the second polymer, so that the second polymer acts as a skeleton therein, and when the binder slurry is applied to the separator, the second polymer plays the role of supporting and connecting the first polymer, and bonding the first polymer to the separator. After the slurry is oven dried to form a bonding layer, the bonding layer can be bonded to the separator, but the side of the bonding layer away from the separator has no bonding strength, which facilitates the winding and unwinding of the separator. Moreover, when the cold pressing process is performed after the separator and the positive and negative electrode plates are wound, after being squeezed, the first polymer and the second polymer can deform under force and penetrate into the pores of the separator and the electrode plate to achieve the bonding effect.

In an embodiment, the shape of the binder includes a spherical shape.

Theoretically, the shape of the binder in the present application is not limited, for example, it can be spherical, rod-shaped, etc. Considering that the spherical shape is conducive to uniform dispersion in the process of stirring the slurry and to uniform coating, it is preferably spherical.

In an embodiment, the first polymer includes an acrylate monomer, and the structure of the acrylate monomer includes: 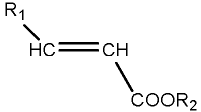 wherein, R1 includes hydrogen atom or alkyl of 1-12 carbon atoms, and R2 includes alkyl of 1-12 carbon atoms.

Acrylate monomers include unsaturated ester groups, which can improve the anti-swelling ability of polymers, and as flexible monomer segments in molecular segments, can adjust the glass transition temperature of polymers and improve toughness of the binder when it is applied, which contributes to good bonding effect.

In an embodiment, the acrylate monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

Theoretically, the present application does not limit the types of acrylate monomers, as long as the acrylate monomers include the above structure, that is, the acrylate monomers include the substances listed above and those not listed in the present application.

By using any one or more of the above-mentioned acrylate monomers, the glass transition temperature of the polymer can be adjusted, and the anti-swelling ability of the polymer can be improved.

In an embodiment, the first polymer includes an acrylonitrile monomer, and the structure of the acrylonitrile monomer includes: 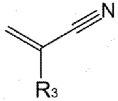 wherein, R3 includes hydrogen atom or alkyl of 1-6 carbon atoms.

There are unsaturated cyano groups in the structure of acrylonitrile monomers, which help to improve ion conductivity and improve adhesiveness.

In an embodiment, the acrylonitrile monomer includes one or more of acrylonitrile and methacrylonitrile.

Theoretically, the present application does not limit the types of acrylonitrile monomers, as long as the acrylonitrile monomers include the above structure, that is, the acrylonitrile monomers include the substances listed above and those not listed in the present application.

The ion conductivity of the binder can be improved by using any one or more of the above-mentioned acrylonitrile monomers.

In an embodiment, the first polymer includes an acrylamide monomer, and the structure of the acrylamide monomer includes: 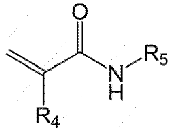 wherein, R4 includes hydrogen atom or alkyl of 1-6 carbon atoms, and R5 includes hydrogen atom, hydroxyl-substituted alkyl of 1-6 carbon atoms, or alkoxy of 1-6 carbon atoms.

The third unit includes an unsaturated amide group, which plays a role of cross-linking and also has good adhesiveness.

In an embodiment, the acrylamide monomer includes one or more of acrylamide, N-methylolacrylamide and N-butoxymethacrylamide.

Theoretically, the present application does not limit the types of acrylamide monomers, as long as the acrylamide monomers include the above structure, that is, the acrylamide monomers include the substances listed above and those not listed in the present application.

The use of any one or more of the above acrylamide monomers can regulate the molecular weight of the polymer, and the molecular weight of the binder being within a certain range helps to improve adhesiveness.

It can be understood that, the constituent monomers of the first polymer may include one, two or three of the above three monomers, which are not specifically limited. It can be understood that when the first polymer is prepared by using the three kinds of monomers at the same time, the adhesiveness of the first polymer is better.

Commonly used polyvinylidene fluoride binders need to be hot-pressed to better exert their bonding effect. As production speeds up and production capacity is saved, the hot pressing process will gradually be replaced by the cold pressing process. After the battery cell is wound, it will undergo a cold pressing process. Since the conventional polyvinylidene fluoride is a homopolymer with a crystallinity of about 50%, the bonding strength between the separator and the positive and negative electrode plates is insufficient; the bonding strength of traditional polyacrylate binders does not meet the requirements under cold pressing either, and problems such as battery cell opening and soft battery cells often occur; also, the wettability to the electrolyte solution is poor, which cannot meet the performance requirements of the secondary battery for the coated separator.

The binder includes an acrylate copolymer and a water-soluble polymer prepared by using the above-mentioned monomers, so that the binder has good adhesiveness.

In an embodiment, the first polymer includes an acrylate monomer, an acrylonitrile monomer and an acrylamide monomer, and the mass ratio of the acrylate monomer, the acrylonitrile monomer and the acrylamide monomer is 100:(1-80):(1-20), preferably 100:(20 -60):(5-15).

In order to improve the comprehensive performance of the first polymer, the first polymer includes an acrylate monomer, an acrylonitrile monomer and an acrylamide monomer, and when the mass ratio of the acrylate monomer, the acrylonitrile monomer and the acrylamide monomer is 100:(1-80):(1-20), preferably 100:(20 -60):(5-15), the bonding effect is better.

In the above 100:(1-80):(1-20)), the value includes the minimum value and maximum value of the range, and every value between the minimum value and the maximum value. Specific examples include but are not limited to the point value in the embodiments and 100:1:1, 100:10:1, 100:30:1, 100:50:1, 100:80:1, 100:10:5, 100:10:10, 100:10:20, 100:30:10, 100:30:20, 100:50:20, 100:80:20, etc., and the range value between any two point values described above.

In the above 100:(20-60):(5-15), the value includes the minimum value and maximum value of the range, and every value between the minimum value and the maximum value. Specific examples include but are not limited to the point value in the embodiments and 100:20:5, 100:30:10, 100:60:15, etc., and the range value between any two point values described above.

The present application further provides a preparation method of a binder for secondary batteries, comprising: blending and stirring water, an emulsifier, an initiator, and constituent monomers of a first polymer, and heating and reacting to obtain a first polymer emulsion;
mixing and stirring the first polymer emulsion and the second polymer, and spray-drying to obtain a binder.

In the present application, the first polymer emulsion is obtained through emulsion polymerization, and the binder is obtained through spray drying.

Emulsion polymerization is to, with the help of emulsifiers and mechanical stirring, disperse monomers in water to form an emulsion, and then add an initiator to initiate the polymerization of the monomers.

Emulsifier refers to a class of substances that can convert incompatible oil and water into an emulsion that is difficult to separate. Emulsifiers are usually surfactants that have both hydrophilic polar groups and hydrophobic (lipophilic) non-polar groups.

Initiator is a substance that initiates the polymerization of monomers. For example, free radical initiators, which refer to a class of compounds that are easily decomposed into free radicals (i.e., primary free radicals) by heat, can be used to initiate free radical polymerization and copolymerization of olefinic and diene monomers.

Water, an emulsifier, an initiator, and monomers constituting a polymer are blended and stirred, and water and emulsifier are stirred and dispersed to form an emulsion. That is, the emulsifier forms micelles in the water phase, and most of the micelles are solubilized with the monomers. Under heating, the initiator initiates the polymerization of the monomers inside the micelles to obtain the emulsion.

Spray drying involves, through mechanical action, dispersing the material to be dried (the mixture of the first polymer emulsion and the second polymer) into very fine mist-like particles (to increase the evaporation area of water, and accelerate the drying process) to come into contact with hot air, which will remove most of the moisture in an instant, and dry the solid matter in the material into powder.

A binder containing the first polymer and the second polymer is obtained through a spray drying process.

An embodiment of the present application further provides a separator, which includes the above-mentioned binder for secondary batteries or a binder prepared by the above-mentioned preparation method of the binder for secondary batteries. Since the binder adopts all the technical solutions of all the above-mentioned embodiments, it at least has all the beneficial effects brought by the technical solutions of the above-mentioned embodiments, which will not be repeated here.

The separator is coated with the above-mentioned binder, which can improve the adhesion between the electrode plate and the binder, and improve the opening problem of the existing battery cell pre-cold pressing process.

An embodiment of the present application further provides a battery cell, and the battery cell includes the above-mentioned separator. Since the separator adopts all the technical solutions of all the above-mentioned embodiments, it at least has all the beneficial effects brought by the technical solutions of the above-mentioned embodiments, which will not be repeated here.

Applying the above separator to the battery cell can improve the cycling performance of the battery cell in large clamps.

An embodiment of the present application further provides a battery, and the battery includes the above-mentioned battery cell. Since the battery cell adopts all the technical solutions of all the above-mentioned embodiments, it at least has all the beneficial effects brought by the technical solutions of the above-mentioned embodiments, which will not be repeated here.

The battery includes battery modules and battery packs.

An embodiment of the present application further provides an electrical apparatus, and the electrical apparatus includes the above-mentioned battery cell or the above-mentioned battery. Since the battery cell or battery adopts all the technical solutions of all the above-mentioned embodiments, it at least has all the beneficial effects brought by the technical solutions of the above-mentioned embodiments, which will not be repeated here.

Additionally, the electrode assembly, the battery cell, the battery, and the electrical apparatus of the present application will be described below with reference to the drawings as appropriate.

In an embodiment of the present application, an electrode assembly is provided.

Generally, the electrode assembly includes a positive electrode plate, a negative electrode plate, an electrolyte, and a separator. During the charging and discharging process of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through. The separator is the above-mentioned separator of the present application.

The positive electrode plate includes a positive electrode current collector and a positive electrode film layer provided on at least one surface of the positive electrode current collector.

As an example, the positive-electrode current collector has two opposite surfaces in its own thickness direction, and the positive electrode film layer is arranged on either or both of the two opposite surfaces of the positive-electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, when the electrode assembly is a lithium-ion battery, the positive electrode active material may be a positive electrode active material for lithium-ion batteries well known in the art. As an example, the positive active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate can be prepared by dispersing the components for preparing the positive electrode plate, for example, the positive electrode active material, the conductive agent, the binder and any other components in a solvent (for example, N-methylpyrrolidone) to form a positive electrode slurry; and coating the positive electrode slurry on a positive electrode current collector, followed by oven drying, cold pressing and other procedures, to obtain the positive electrode plate.

The negative electrode plate includes a negative electrode current collector and a negative electrode film layer arranged on at least one surface of the negative electrode current collector, wherein the negative electrode film layer includes a negative electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative active material may include at least one of the following materials: artificial graphite, natural graphite, soft carbon, hard carbon, silicon-based material, tin-based material, and lithium titanate, etc. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer may further optionally comprise other auxiliaries, for example, a thickener (e. g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

The electrolyte serves to conduct ions between the positive electrode plate and the negative electrode plate. The type of the electrolyte is not particularly limited in the present application, and can be selected according to requirements.

In some embodiments, the electrolyte is an electrolyte solution. The electrolyte solution comprises an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution may further optionally include an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

In some embodiments, the electrode assembly also comprises a separator. The type of the separator is not particularly limited in the present application, and any well-known separator with a porous structure having good chemical stability and mechanical stability may be selected.

In some embodiments, the material of the separator can include at least one of glass fiber, nonwoven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode plate, the negative electrode plate, and the separator may be made into an electrode assembly by a winding process or a stacking process.

In some embodiments, the electrode assembly may include an outer package. The outer package can be used to encapsulate the above-mentioned electrode assembly and electrolyte.

In some embodiments, the outer package of the electrode assembly may be a hard case, such as a hard plastic case, an aluminum case, or a steel case. The outer package of the electrode assembly can also be a soft pack, such as a bag-type soft pack. The material of the soft package can be plastic, and as plastic, polypropylene, polybutylene terephthalate, and polybutylene succinate can be enumerated.

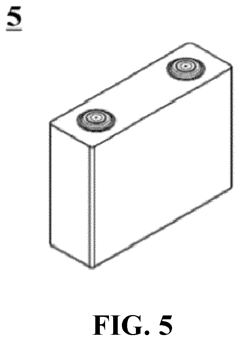

The present application has no particular limitation on the shape of the electrode assembly, which can be cylindrical, square or any other shape. For example, Fig. 5 is an example of a secondary battery 5 having a square structure.

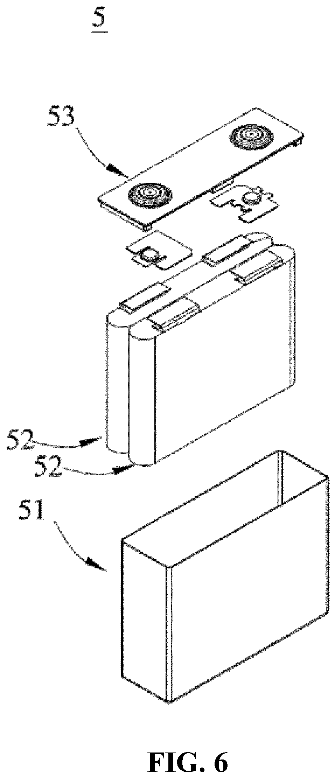

In some embodiments, referring to Fig. 6, the outer package can include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

In some embodiments, the electrode assemblies may be assembled into a battery module, and the number of the electrode assemblies included in the battery module may be one or more, and the specific number may be selected by those skilled in the art according to the application and capacity of the battery module.

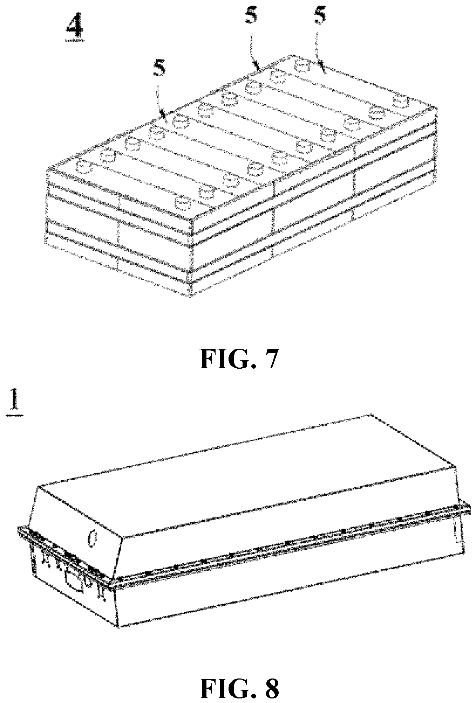

Fig. 7 is an example of a battery module 4. Referring to Fig. 7, in the battery module 4, multiple secondary batteries 5 may be sequentially arranged along a length direction of the battery module 4. Of course, they can be arranged in any other way. The plurality of secondary batteries 5 may further be fixed by fasteners.

Optionally, the battery module 4 can further include a case having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

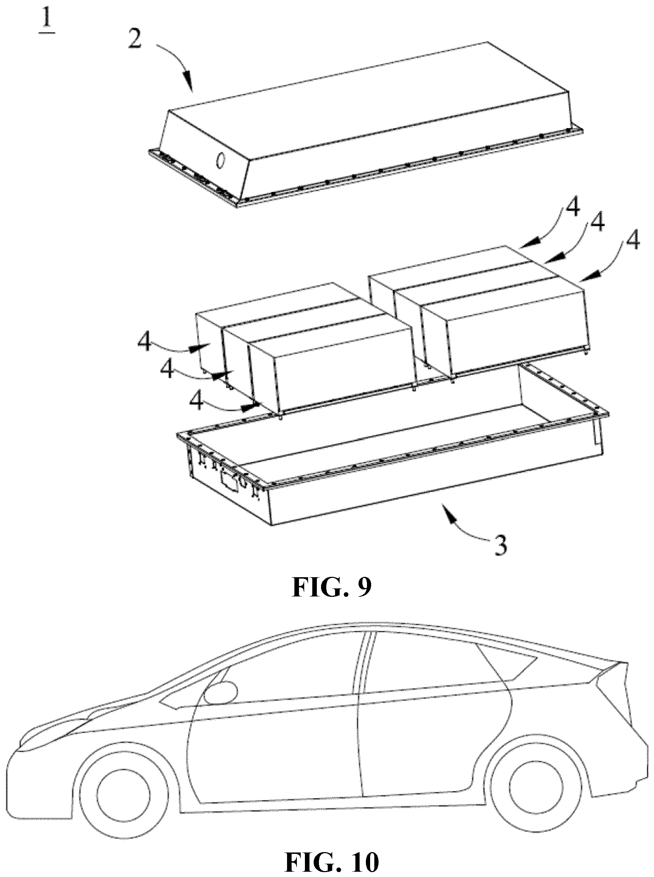

Figs. 8 and 9 are an example of a battery pack 1. Referring to Figs. 8 and 9, the battery pack 1 can include a battery box and a plurality of battery modules 4 provided in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, and the electrical apparatus includes at least one of the electrode assembly, the battery module, or the battery pack provided in the present application. The electrode assembly, the battery module, or the battery pack may be used as a power source for the electrical apparatus, and may also be used as an energy storage unit for the electrical apparatus. The electrical apparatus may include a mobile device (e.g., a mobile phone, a laptop), an electric vehicle (e.g., all-electric vehicle, a hybrid electric vehicle, a plug-in hybrid electric vehicle, an electric bicycle, an electric scooter, an electric golf cart, an electric truck), an electric train, a ship and a satellite, and an energy storage system, etc., but is not limited thereto.

For the electrical apparatus, the electrode assembly, the battery module, or the battery pack can be selected according to its use requirements.

Fig. 10 shows an electrical apparatus as an example. The electrical apparatus is an all-electric vehicle, a hybrid electric vehicle or a plug-in hybrid electric vehicle, and the like. In order to meet the requirements of the electrical apparatus for high power and high energy density of electrode assemblies, a battery pack or a battery module may be used.

As another example, the apparatus may be a mobile phone, a tablet, a laptop, etc. The apparatus is generally required to be light and thin, and may use an electrode assembly as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literature of the art or the product specifications are followed. All of the used agents or instruments which are not specified with the manufacturer are conventional commercially-available products.

### Preparation of the first polymer emulsion

### Preparation Example 1

According to the mass ratio of the three monomers of 100:1:10, the acrylate monomer methyl acrylate, the acrylonitrile monomer acrylonitrile and the acrylamide monomer acrylamide were weighed separately, and the monomers were mixed evenly. To a 1000 mL four-necked flask equipped with a mechanical stirrer, a thermometer and a condenser, 200 g of the mixed monomers, 5 g of sodium lauryl sulfate emulsifier, 1.8 g of ammonium persulfate initiator, and 260 g of deionized water were added and emulsified with high-speed stirring for 30 min. Under the protection of nitrogen, the mixture was heated to 75°C to react for 4 h, and then cooled to below 40°C, adjusted with ammonia to have neutral pH, and then filtered to obtain a first polymer emulsion of Preparation Example 1.

### Preparation Example 2 to Preparation Example 12

On the basis of Preparation Example 1, the type and mass ratio of the monomers were adjusted to obtain Preparation Examples 2 to 12.

### Example 1

### Preparation of binder

The first polymer and the second polymer were weighed and added at a weight ratio of 1:1, and deionized water was added to adjust the solid content of the system to 20%. The system was well mixed with stirring and then subjected to a spray drying process to obtain a binder for a separator. The conditions of the spray drying process were that the inlet air temperature was 110°C and the outlet air temperature was 50°C.

### Example 2 to Example 24

On the basis of Example 1, the types and weight ratios of the first polymer and the second polymer were adjusted to obtain Examples 2 to 24.

### Comparative Example 1

On the basis of Example 1, only the second polymer was used to prepare a binder.

### Comparative Example 2

On the basis of Example 7, only the first polymer was used to prepare a binder.

### Preparation of battery cell and battery

### Preparation of separator

A commercially available PP microporous film with a thickness of 7 µm and an average pore size of 80 nm (from Zoco Electronic Technology Co., Ltd.) was used as the substrate. The binder for separator prepared as described above was well mixed in deionized water with stirring to obtain a slurry (solid content: 20%). The slurry was spray-coated on both surfaces of the substrate, and the solvent was removed by drying. The coating density of the coating composition on the substrate was 1.5 g/m² to obtain a separator.

### Preparation of positive electrode plate

Polyvinylidene fluoride (PVDF), lithium iron phosphate (LFP), conductive agent carbon black, and N-methylpyrrolidone (NMP) at a mass ratio of 1.2:58.38:0.42:40 were well mixed with stirring to prepare a positive electrode slurry. The positive electrode slurry was evenly coated on an aluminum foil as a positive electrode current collector at a load of 200 g/m², followed by oven drying, cold pressing and slitting to obtain a positive electrode plate.

### Preparation of negative electrode plate

Artificial graphite, conductive agent acetylene black, binder styrene butadiene rubber (SBR), and thickener sodium carboxymethylcellulose (CMC-Na) at a mass ratio of 96.2:1.0:1.6:1.2 were added into deionized water, well mixed with stirring to prepare a negative electrode slurry (solid content: 63%). The negative electrode slurry was coated onto a copper foil as the negative electrode collector at a load of 98 g/m², followed by oven drying, cold pressing and slitting, to obtain a negative electrode plate.

### Preparation of electrolyte solution

At 25°C, ethylene carbonate (EC), methyl ethyl carbonate (EMC) and diethyl carbonate (DEC) were mixed at a volume ratio of 1:1:1 to obtain a mixed solvent, and then LiPF₆ was dissolved in the mixed solvent to obtain an electrolyte solution, wherein the concentration of LiPF₆ was 1 mol/L.

### Preparation of secondary battery

The above-mentioned positive electrode plate, separator and negative electrode plate were stacked in sequence and wound, and mold by cold pressing (during which the separator and the electrode plates were bonded) to obtain a battery cell. The battery cell was put into an outer package, add the electrolyte solution prepared as above was added, the system was subjected to packaging, standing, formation, aging and other processes to obtain a secondary battery.

### Performance test

### Cold pressing bonding strength test:

The negative electrode plate and separator of the battery were stacked together, placed on a hot press, and the parameters of the hot press were set as follows: temperature 25°C, pressure 7t, time 30s. Pressing was applied to obtain a bonded separator/positive electrode plate sample. The separator/electrode plate sample was cut into rectangular strips of 150mm×20mm. One side of the above-mentioned electrode plate of rectangular strip was stuck on a steel plate with double-sided tape, and the separator and the electrode plate were separated by a length of 2 cm along the length direction at one end of the rectangular strip to prepare a test sample.

### The steel plate was kept horizontal and fixed with the lower clamp of a universal testing machine (Xieqiang Instrument Manufacturing (Shanghai) Co., Ltd., model CTM2100). The peeled end of the separator as described above was fixed with the upper clamp of the universal testing machine, and connected to a tensile tester . The test conditions were set as follows: tensile rate, 20 mm/min, and horizontal pulling distance, 10 cm. After the pulling force was stable, the pulling force value was recorded, and the bonding strength between the separator and the electrode plate was obtained from the ratio of the pulling force value to the sample width.

### EIS data (electrochemical impedance spectroscopy):

A sine wave voltage signal with a frequency of W1 and a small amplitude was applied to the battery system using the CHI660D electrochemical workstation of Shanghai Chinstruments. The system will generate a sine wave current response with a frequency of W2. Changes in the ratio of the excitation voltage to the response current represent the impedance spectrum of the electrochemical system. In the AC impedance test, the frequency range of the test was 10 mHz to 100 kHz, and the amplitude was 5mV. Through the test, information such as the real part and imaginary part of the impedance at different frequencies can be obtained.

### Rate performance of lithium-ion battery:

The CT-2001 A LAND battery test system of Wuhan Jinnuo Electronics was used and the detection environment was as follows: room temperature 25°C and voltage range of 2.5-3.65 V. The test battery assembled with the prepared electrode materials was subjected to 5 constant current charge-discharge cycles at rates of 0.2C, 0.5C, 1C, 2C, 5C, 0.2C respectively. The specific process was as follows: 0.2C (5 cycles, the capacity of the 5th cycle is recorded as C1), and then 0.5C (5 cycles), 1C (5 cycles), 2C (5 cycles), 5C (5 cycles), 0.2C (5 cycles, the capacity of the 5th cycle is recorded as C2). That is, the battery capacity after the first 5 constant current charge-discharge cycles at 0.2C is recorded as C1, and the battery capacity after the second 5 constant current charge-discharge cycles at 0.2C is recorded as C2, and the rate performance is P=(C2/C1)×100%.

**Table 1 Preparation parameters of the first polymer emulsion**

| Serial Number | Acrylate monomer | Acrylonitrile Monomer | Acrylamide monomer | Mass ratio |
|---|---|---|---|---|
| Preparation Example 1 | Methyl acrylate | Acrylonitrile | Acrylamide | 100:1:10 |
| Preparation Example 2 | Methyl acrylate | Acrylonitrile | Acrylamide | 100:20:10 |
| Preparation Example 3 | Methyl acrylate | Acrylonitrile | Acrylamide | 100:40:10 |
| Preparation Example 4 | Methyl acrylate | Acrylonitrile | Acrylamide | 100:60:10 |
| Preparation Example 5 | Methyl acrylate | Acrylonitrile | Acrylamide | 100:80:10 |
| Preparation Example 6 | Isobutyl acrylate | Methacryloni trile | N-methylolacrylamide | 100:40:1 |
| Preparation Example 7 | Isobutyl acrylate | Methacryloni trile | N-methylolacrylamide | 100:40:5 |
| Preparation Example 8 | Isobutyl acrylate | Methacryloni trile | N-methylolacrylamide | 100:40:10 |
| Preparation Example 9 | Isobutyl acrylate | Methacryloni trile | N-methylolacrylamide | 100:40:15 |
| Preparation Example 10 | Isobutyl acrylate | Methacryloni trile | N-methylolacrylamide | 100:40:20 |
| Preparation Example 11 | Methyl acrylate | Acrylonitrile | Acrylamide | 100:0:10 |
| Preparation Example 12 | Isobutyl acrylate | Methacryloni trile | N-methylolacrylamide | 100:40:0 |

**Table 2 Preparation parameters of binder for separator**

| Serial Number | Acrylate copolymer | Water-soluble polymer | Mass ratio of acrylate copolyme r to water-soluble polymer | Average particle size (µm) |
|---|---|---|---|---|
| Example 1 | Preparation Example 3 | Polyacrylic acid | 1:1 | 7 |
| Example 2 | Preparation Example 6 | Polyacrylic acid | 1:1 | 7 |
| Example 3 | Preparation Example 9 | Polyacrylic acid | 1:1 | 7 |
| Example 4 | Preparation Example 3 | Polyacrylami de | 1:1 | 7 |
| Example 5 | Preparation Example 3 | Polyethylenei mine | 1:1 | 7 |
| Example 6 | Preparation Example 3 | Polyethylene glycol | 1:1 | 7 |
| Example 7 | Preparation Example 6 | Polyacrylic acid | 1:0.2 | 7 |
| Example 8 | Preparation Example 6 | Polyacrylic acid | 1:2 | 7 |
| Example 9 | Preparation Example 6 | Polyacrylic acid | 1:5 | 7 |
| Example 10 | Preparation Example 6 | Polyacrylic acid | 1:10 | 7 |
| Example 11 | Preparation Example 9 | Polyacrylic acid | 1:1 | 0.5 |
| Example 12 | Preparation Example 9 | Polyacrylic acid | 1:1 | 1 |
| Example 13 | Preparation Example 9 | Polyacrylic acid | 1:1 | 10 |
| Example 14 | Preparation Example 9 | Polyacrylic acid | 1:1 | 15 |
| Example 16 | Preparation Example 9 | Polyacrylic acid | 1:1 | 18 |
| Example 16 | Preparation Example 1 | Polyvinylpyrr olidone | 1:1 | 7 |
| Example 17 | Preparation Example 2 | Polyvinyl alcohol | 1:1 | 7 |
| Example 18 | Preparation Example 4 | Polymaleic anhydride | 1:1 | 7 |
| Example 19 | Preparation Example 5 | Polyacrylic acid | 1:1 | 7 |
| Example 20 | Preparation Example 7 | Polyacrylic acid | 1:1 | 7 |
| Example 21 | Preparation Example 8 | Polyacrylic acid | 1:1 | 7 |
| Example 22 | Preparation Example 10 | Polyacrylic acid | 1:1 | 7 |
| Example 23 | Preparation Example 11 | Polyacrylic acid | 1:1 | 7 |
| Example 24 | Preparation Example 12 | Polyacrylic acid | 1:1 | 7 |
| Comparative Example 1 | / | Polyacrylic acid | / | 7 |
| Comparative Example 2 | Preparation Example 6 | / | / | 7 |

**Table 3 Performance test parameters**

| Serial Number | Bonding strength between separator and electrode plate (N/m) | EIS data (Ω) | Battery rate performance (%) |
|---|---|---|---|
| Example 1 | 18.71 | 1.206 | 98.3 |
| Example 2 | 16.56 | 1.372 | 97.8 |
| Example 3 | 15.42 | 1.441 | 96.5 |
| Example 4 | 16.96 | 1.253 | 98.1 |
| Example 5 | 14.49 | 1.467 | 96.0 |
| Example 6 | 15.72 | 1.429 | 97.2 |
| Example 7 | 8.81 | 1.647 | 94.5 |
| Example 8 | 14.02 | 1.481 | 95.7 |
| Example 9 | 9.15 | 1.592 | 94.9 |
| Example 10 | 4.96 | 1.750 | 93.0 |
| Example 11 | 5.82 | 1.736 | 93.7 |
| Example 12 | 8.78 | 1.702 | 94.1 |
| Example 13 | 16.32 | 1.393 | 97.4 |
| Example 14 | 10.79 | 1.564 | 95.2 |
| Example 15 | 5.17 | 1.741 | 93.3 |
| Example 16 | 12.63 | 1.527 | 95.3 |
| Example 17 | 13.67 | 1.506 | 95.3 |
| Example 18 | 16.52 | 1.388 | 97.7 |
| Example 19 | 13.71 | 1.49 | 95.5 |
| Example 20 | 16.82 | 1.289 | 98.0 |
| Example 21 | 17.62 | 1.242 | 98.1 |
| Example 22 | 14.59 | 1.455 | 96.2 |
| Example 23 | 4.26 | 1.769 | 92.7 |
| Example 24 | 3.87 | 1.801 | 92.6 |
| Comparative Example 1 | 1.06 | 2.146 | 89.5 |
| Comparative Example 2 | 2.19 | 2.026 | 91.2 |

The first polymer is prepared by suitable monomers, the mass ratio of the first polymer to the second polymer is regulated within a suitable range, and a binder is obtained by a spray drying process. The resulting binder has good adhesion within a suitable range and is applied in the separator, which is conducive to improving the performance of the battery.

The above are only the preferred embodiments of the present application and do not thus limit the patent scope of the present application. Any equivalent structural transformation made by using the contents of the specification and drawings of the present application under the application concept of the present application, or the direct/indirect application in other related technical fields is included in the patent protection scope of the present application.

## Claims

1. A binder for secondary batteries, wherein the binder includes a first polymer and a second polymer, the first polymer includes an acrylate copolymer, and the second polymer includes a water-soluble polymer.

2. The binder for secondary batteries according to claim 1, wherein the mass ratio of the first polymer to the second polymer is 1:(0.1-10); preferably 1:(0.2-5).

3. The binder for secondary batteries according to claim 1 or 2, wherein the second polymer includes one or more of polyacrylamide, polyacrylic acid, polyvinylpyrrolidone, polyvinyl alcohol, polyethylene glycol, polymaleic anhydride and polyethyleneimine.

4. The binder for secondary batteries according to any one of claims 1 to 3, wherein the volume particle size distribution Dv50 of the binder is 1 µm to 15 µm; preferably 3 µm to 12 µm.

5. The binder for secondary batteries according to any one of claims 1 to 4, wherein the shape of the binder includes a spherical shape.

6. The binder for secondary batteries according to any one of claims 1 to 5, wherein the first polymer includes an acrylate monomer, and the structure of the acrylate monomer includes: 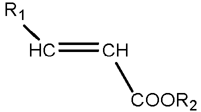 wherein, R1 includes hydrogen atom or alkyl of 1-12 carbon atoms, and R2 includes alkyl of 1-12 carbon atoms.

7. The binder for secondary batteries according to claim 6, wherein the acrylate monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

8. The binder for secondary batteries according to any one of claims 1 to 7, wherein the first polymer includes an acrylonitrile monomer, and the structure of the acrylonitrile monomer includes: 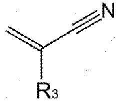 wherein, R3 includes hydrogen atom or alkyl of 1-6 carbon atoms.

9. The binder for secondary batteries according to claim 8, wherein the acrylonitrile monomer includes one or more of acrylonitrile and methacrylonitrile.

10. The binder for secondary batteries according to any one of claims 1 to 9, wherein the first polymer includes an acrylamide monomer, and the structure of the acrylamide monomer includes: 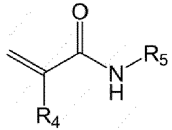 wherein, R4 includes hydrogen atom or alkyl of 1-6 carbon atoms, and R5 includes hydrogen atom, hydroxyl-substituted alkyl of 1-6 carbon atoms or alkoxy of 1-6 carbon atoms.

11. The binder for secondary batteries according to claim 10, wherein the acrylamide monomer includes one or more of acrylamide, N-methylolacrylamide and N-butoxymethacrylamide.

12. The binder for secondary batteries according to any one of claims 1 to 11, wherein the first polymer includes an acrylate monomer, an acrylonitrile monomer and an acrylamide monomer, and the mass ratio of the acrylate monomer, the acrylonitrile monomer and the acrylamide monomer is 100:(1-80):(1-20), preferably 100:(20 -60):(5-15).

13. A preparation method of the binder for secondary batteries according to any one of claims 1 to 12, comprising:
blending and stirring water, an emulsifier, an initiator, and constituent monomers of the first polymer, and heating and reacting to obtain a first polymer emulsion;
mixing and stirring the first polymer emulsion and the second polymer, and spray-drying to obtain a binder.

14. A separator, wherein the separator includes the binder for secondary batteries according to any one of claims 1 to 12 or a binder prepared by the preparation method of the binder for secondary batteries according to claim 13.

15. A battery cell, wherein the battery cell includes the separator according to claim 14.

16. A battery, wherein the battery includes the battery cell according to claim 15.

17. An electrical apparatus, wherein the electrical apparatus includes the battery cell according to claim 15 or the battery according to claim 16.
